# EUROPÄISCHE PATENTSCHRIFT

(11) **EP 3 509 159 B1**
(45) Veröffentlichungstag und Bekanntmachung des Hinweises auf die Patenterteilung: **21.07.2021**
(21) Anmeldenummer: 18211835.6
(22) Anmeldetag: 12.12.2018
(51) Int. Cl.: H01M 10/44, H01M 10/48, H01M 10/625, H01M 10/615, H01M 10/657, H01M 10/613, H01M 10/6552

(54) **BATTERIESYSTEM FÜR EIN ELEKTROFAHRZEUG, VERFAHREN ZUM LADEN EINES BATTERIESYSTEMS UND ELEKTROFAHRZEUG**
BATTERY SYSTEM FOR AN ELECTRIC VEHICLE, METHOD FOR CHARGING A BATTERY SYSTEM AND ELECTRIC VEHICLE
SYSTÈME DE BATTERIE POUR UN VÉHICULE ÉLECTRIQUE, PROCÉDÉ DE CHARGEMENT D'UN SYSTÈME DE BATTERIE ET VÉHICULE ÉLECTRIQUE

(30) Priorität: 08.01.2018 DE 102018200168
(43) Veröffentlichungstag der Anmeldung: 10.07.2019
(73) Patentinhaber: Robert Bosch GmbH, 70442 Stuttgart (DE)
(72) Erfinder: Woll, Christoph, 70839 Gerlingen (DE); Haag, Jasmin, 71254 Ditzingen (DE); Sahhary, Waleed, 71065 Sindelfingen (DE)

(56) Entgegenhaltungen:
- EP-A1- 2 853 434
- EP-A2- 1 710 889
- US-A1- 2017 133 731

## Beschreibung

Die Erfindung betrifft ein Batteriesystem für ein Elektrofahrzeug, welches eine Mehrzahl von Batteriemodulen und eine erste Heizvorrichtung zum direkten Erwärmen einer ersten Gruppe von Batteriemodulen umfasst, wobei jedes Batteriemodul mindestens eine Batteriezelle aufweist. Die Erfindung betrifft ein Verfahren zum Laden eines erfindungsgemäßen Batteriesystems. Ferner betrifft die Erfindung ein Elektrofahrzeug, welches ein erfindungsgemäßes Batteriesystem umfasst, welches mit dem erfindungsgemäßen Verfahren betreibbar ist.

### Stand der Technik

Es zeichnet sich ab, dass in Zukunft vermehrt elektrisch angetriebene Kraftfahrzeuge zum Einsatz kommen werden. In elektrisch angetriebenen Kraftfahrzeugen, wie Elektrofahrzeugen und Hybridfahrzeugen, aber auch in stationären Anwendungen werden aufladbare Batteriesysteme eingesetzt, vorwiegend um elektrische Antriebseinrichtungen mit elektrischer Energie zu versorgen. Für solche Anwendungen eignen sich insbesondere Batteriesysteme mit Lithium-Batteriezellen. Lithium-Batteriezellen zeichnen sich unter anderem durch hohe Energiedichten, thermische Stabilität und eine äußerst geringe Selbstentladung aus. Mehrere derartige Lithium-Batteriezellen werden elektrisch seriell als auch parallel miteinander verschaltet und zu Batteriemodulen verbunden. Mehrere solche Batteriemodule werden, insbesondere seriell, zu einem Batteriestrang miteinander verschaltet. Mehrere derartig ausgebildete Batteriestränge werden, insbesondere parallel, miteinander verschaltet und bilden so das Batteriesystem des Elektrofahrzeugs.

Lithium-Batteriezellen neuartiger Technologien weisen Festkörperelektrolyte auf und haben verhältnismäßig hohe Energiedichten. Die chemischen Bestandteile von solchen Lithium-Batteriezellen sind hoch aktiv, können aber nur innerhalb eines bestimmten Temperaturbereichs, beispielsweise oberhalb von 50°C, insbesondere oberhalb von 70°C, und unterhalb von 90°C, optimal betrieben werden. Batteriesysteme mit derartigen Lithium-Batteriezellen werden auch als Mitteltemperaturbatterien (Mid-T-Batterien) bezeichnet und haben außerhalb des besagten Temperaturbereichs einen verhältnismäßig hohen elektrischen Innenwiderstand. Deshalb können Mitteltemperaturbatterien außerhalb dieses Temperaturbereichs nicht optimal betrieben werden.

Derartige in Elektrofahrzeugen eingesetzte Batteriesysteme sind bei niedrigen Temperaturen somit eingeschränkt. Dies gilt sowohl für einen Ladevorgang als auch für einen Entladevorgang der Batteriezellen des Batteriesystems. Die in Elektrofahrzeugen eingesetzten Batteriesysteme sollen aber auch bei niedrigen Temperaturen schnell für einen Ladevorgang sowie für einen Entladevorgang einsatzbereit sein.

Die Dokumente US 2012/295142 A1 und DE 10 2009 046 567 A1 beschreiben ein Batteriesystem sowie ein Temperierungsverfahren zum Erzeugen eines optimalen Temperaturbereichs zum Betreiben des Batteriesystems. Dabei wird in einer Aufheizphase zunächst ein erstes Modul des Batteriesystems aufgeheizt, und Wärme, die im Betrieb des ersten Moduls entsteht, wird zum Aufheizen eines weiteren Moduls genutzt.

Aus dem Dokument US 2015/061605 A1 ist ein Ladesystem für ein Elektrofahrzeug bekannt. Das Ladesystem umfasst eine Batterie zum Speichern von elektrischer Energie und eine Heizvorrichtung zum Erwärmen der Batterie.

Das Dokument US 2015/077057 A1 betrifft ein Verfahren zum Laden einer Batterie. Dabei wird zunächst ermittelt, ob ein Schnellladevorgang mit einer hohen Laderate möglich ist. Falls ja, so wird der Schnellladevorgang durchgeführt. Anderenfalls wird ein Ladevorgang mit einer verringerten Laderate durchgeführt.

Das Dokument US 2017/133731 A1 beschreibt ein Batteriesystem, welches zwei Gruppen aufweist. Bei niedriger Temperatur liefert die erste Gruppe elektrische Energie zum Erwärmen der zweiten Gruppe. Wenn die zweite Gruppe ausreichend erwärmt ist liefert die zweite Gruppe elektrische Energie zum Laden der ersten Gruppe.

Ein weiteres Beispiel für ein Batteriesystem und ein Verfahren zum Laden dieses ist in EP 1 710 889 A2 beschrieben.

### Offenbarung der Erfindung

Es wird ein Batteriesystem für ein Elektrofahrzeug vorgeschlagen. Das Batteriesystem umfasst dabei eine Mehrzahl von Batteriemodulen und eine erste Heizvorrichtung zum direkten Erwärmen einer ersten Gruppe von Batteriemodulen. Das bedeutet, dass die erste Heizvorrichtung derart ausgestaltet und angeordnet ist, dass von der ersten Heizvorrichtung abgegebene Wärme unmittelbar und annähernd ausschließlich an die Batteriemodule der ersten Gruppe übertragen wird, wodurch die erste Gruppe von Batteriemodulen unmittelbar erwärmt wird.

Jedes Batteriemodul weist mindestens eine Batteriezelle, vorzugsweise mehrere Batteriezellen, auf, die elektrisch seriell als auch parallel miteinander verschaltet sein können. Bei den Batteriezellen handelt es sich beispielsweise um Lithium-Batteriezellen, welche Festkörperelektrolyte aufweisen. Die besagten Lithium-Batteriezellen können nur innerhalb eines bestimmten Temperaturbereichs, beispielsweise oberhalb von 50°C, insbesondere oberhalb von 70°C, und unterhalb von 90°C, optimal betrieben werden. Insbesondere ist ein Laden der Batteriezellen nur innerhalb des besagten Temperaturbereichs optimal möglich.

Die erste Gruppe von Batteriemodulen ist räumlich auf mindestens zwei Seiten von je einer weiteren Gruppe von Batteriemodulen umgeben. Dabei sind die Batteriemodule räumlich derart angeordnet, dass Abwärme, die beim Erwärmen und/oder beim Laden der ersten Gruppe von Batteriemodulen entsteht, an weitere Gruppen von Batteriemodulen übertragen wird. Vorzugsweise ist die erste Gruppe von Batteriemodulen zentral angeordnet und beidseitig von je mindestens einer weiteren Gruppe von Batteriemodulen umgeben.

Vorzugsweise sind die Batteriemodule der ersten Gruppe von Batteriemodulen seriell miteinander verschaltet und bilden einen Batteriestrang. Ebenso sind die Batteriemodule der weiteren Gruppen von Batteriemodulen vorzugsweise jeweils seriell miteinander verschaltet und bilden Batteriestränge. Das Batteriesystem umfasst also mehrere Batteriestränge, die vorzugsweise elektrisch parallel verschaltet sind, wobei jeder Batteriestrang eine Gruppe von Batteriemodulen umfasst.

Gemäß einer vorteilhaften Weiterbildung der Erfindung ist mindestens eine weitere Heizvorrichtung zur Erwärmung von Batteriemodulen vorgesehen. Die weitere Heizvorrichtung kann beispielsweise ausschließlich die weiteren Gruppen von Batteriemodulen direkt Erwärmen. Die weitere Heizvorrichtung kann aber auch beispielsweise alle Gruppen von Batteriemodulen, einschließlich der ersten Gruppe von Batteriemodulen, direkt Erwärmen. Die erste Heizvorrichtung und die mindestens eine weitere Heizvorrichtung sind unabhängig voneinander aktivierbar.

Bevorzugt ist ferner mindestens eine Kühlvorrichtung zur Kühlung von Batteriemodulen des Batteriesystems vorgesehen. Die Kühlvorrichtung kann dabei zum gleichzeitigen Kühlen aller Gruppen von Batteriemodulen dienen. Die Kühlvorrichtung kann aber auch zum separaten Kühlen der einzelnen Gruppen von Batteriemodulen dienen.

Es wird auch ein Verfahren zum Laden eines erfindungsgemäßen Batteriesystems vorgeschlagen. Das erfindungsgemäße Verfahren umfasst dabei mindestens die nachfolgend genannten Schritte.

Zunächst erfolgt ein Erwärmen der ersten Gruppe von Batteriemodulen durch die erste Heizvorrichtung. Dabei wird eine Gruppentemperatur der ersten Gruppe von Batteriemodulen gemessen.

Anschließend erfolgt ein Laden der ersten Gruppe von Batteriemodulen mit einem ersten Ladestrom, wenn die Gruppentemperatur der ersten Gruppe von Batteriemodulen eine vorgegebene Minimaltemperatur erreicht hat.

Dabei erfolgt auch ein Übertragen von Abwärme, die beim Erwärmen und/oder beim Laden der ersten Gruppe von Batteriemodulen entsteht, an weitere Gruppen von Batteriemodulen. Die Abwärme wird insbesondere an diejenigen Gruppen von Batteriemodulen übertragen, von welchen die erste Gruppe von Batteriemodulen räumlich auf mindestens zwei Seiten umgeben ist, die also unmittelbar benachbart zu der ersten Gruppe von Batteriemodulen angeordnet sind. Dabei werden auch weitere Gruppentemperaturen der weiteren Gruppen von Batteriemodulen gemessen.

Dann erfolgt ein Laden von mindestens einer weiteren Gruppe von Batteriemodulen mit einem weiteren Ladestrom, wenn eine Gruppentemperatur der weiteren Gruppe von Batteriemodulen die vorgegebene Minimaltemperatur erreicht hat.

Vorzugsweise erfolgt ein Abschalten des Ladestroms einer Gruppe von Batteriemodulen spätestens, wenn die Gruppentemperatur der Gruppe von Batteriemodulen eine vorgegebene Maximaltemperatur erreicht hat. Der Ladestrom einer Gruppe von Batteriemodulen wird gegebenenfalls bereits abgeschaltet, wenn die Batteriezellen der Batteriemodule vollständig geladen sind.

Gemäß einer vorteilhaften Ausgestaltung der Erfindung wird mindestens eine weitere Gruppe von Batteriemodulen zusätzlich durch eine weitere Heizvorrichtung erwärmt, bevor die weitere Gruppe von Batteriemodulen mit dem weiteren Ladestrom geladen wird. Dadurch erreicht die Gruppentemperatur der weiteren Gruppe von Batteriemodulen früher die Minimaltemperatur und das Laden kann früher beginnen.

Optional kann eine Gruppe von Batteriemodulen durch eine Kühlvorrichtung gekühlt werden, wenn die Gruppe von Batteriemodulen die vorgegebene Maximaltemperatur erreicht hat. Dadurch sinkt die Gruppentemperatur dieser Gruppe von Batteriemodulen wieder unter die Maximaltemperatur und das Laden kann fortgesetzt werden.

Gemäß einer vorteilhaften Ausgestaltung der Erfindung wird der Ladestrom einer Gruppe von Batteriemodulen in Abhängigkeit von der Gruppentemperatur der Gruppe von Batteriemodulen variiert. Der Ladestrom der Gruppe von Batteriemodulen wird dabei derart variiert, dass die Gruppentemperatur der Gruppe von Batteriemodulen zwischen der Minimaltemperatur und der Maximaltemperatur bleibt, und dass die Batteriezellen in der besagten Gruppe von Batteriemodulen möglichst schnell geladen werden.

Vorzugsweise weist der Ladestrom einer Gruppe von Batteriemodulen einen minimalen Stromwert auf, wenn die Gruppentemperatur der Gruppe von Batteriemodulen gleich der Minimaltemperatur ist. Bei einem Anstieg der Gruppentemperatur der Gruppe von Batteriemodulen wird der Ladestrom erhöht.

Gemäß einer bevorzugten Ausgestaltung der Erfindung wird der Ladestrom einer Gruppe von Batteriemodulen beginnend bei dem minimalen Stromwert ständig erhöht, bis die Gruppentemperatur der Gruppe von Batteriemodulen gleich einer Schwellentemperatur ist. Die Schwellentemperatur ist dabei größer als die Minimaltemperatur und kleiner als die Maximaltemperatur.

Vorzugsweise wird der Ladestrom einer Gruppe von Batteriemodulen derart erhöht, dass ein Verlauf des Ladestroms der Gruppe von Batteriemodulen in Abhängigkeit von der Gruppentemperatur der Gruppe von Batteriemodulen einen Wendepunkt bei der Schwellentemperatur aufweist.

Der Ladestrom einer Gruppe von Batteriemodulen weist, wenn die Gruppentemperatur der Gruppe von Batteriemodulen gleich der Schwellentemperatur ist, einen Schwellenwert auf. Der Ladestrom der Gruppe von Batteriemodulen ist größer als der besagte Schwellenwert, wenn die Gruppentemperatur der Gruppe von Batteriemodulen größer als die Schwellentemperatur und kleiner als die Maximaltemperatur ist.

Es wird auch ein Elektrofahrzeug vorgeschlagen, das ein erfindungsgemäßes Batteriesystem umfasst, welches mit dem erfindungsgemäßen Verfahren betreibbar ist.

### Vorteile der Erfindung

Mittels des erfindungsgemäßen Verfahrens kann ein erfindungsgemäßes Batteriesystem auch bei niedrigen Außentemperaturen verhältnismäßig schnell auf eine Betriebstemperatur gebracht werden, bei welcher die Batteriezellen optimal betreibbar sind. Insbesondere können die Batteriezellen auch bei niedrigen Außentemperaturen und nach langer Standzeit verhältnismäßig schnell geladen werden. Ein Elektrofahrzeug mit einem erfindungsgemäßen Batteriesystem ist somit auch bei tiefen Außentemperaturen verhältnismäßig schnell fahrbereit, wodurch sich die Verfügbarkeit erhöht. Mittels des erfindungsgemäßen Verfahrens werden die Batteriezellen des erfindungsgemäßen Batteriesystems gleichmäßig und schonend erwärmt und geladen. Mittels des erfindungsgemäßen Verfahrens wird ferner eine zu starke Erwärmung des erfindungsgemäßen Batteriesystems beim Laden der Batteriezellen weitgehend vermieden. Eine Kühlung der Batteriezellen während des Ladens ist in der Regel nicht erforderlich, wodurch der Aufwand für die Kühlung des erfindungsgemäßen Batteriesystems verringert ist. Somit ist die Energiebilanz des erfindungsgemäßen Batteriesystems verbessert und es werden Betriebskosten eingespart.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Batteriemoduls mit mehreren Batteriezellen,
- Figur 2: eine schematische Darstellung eines Batteriesystems mit mehreren Batteriesträngen,
- Figur 3: eine schematische Darstellung eines Verlaufs einer Gruppentemperatur einer Gruppe von Batteriemodulen während des Ladens und
- Figur 4: eine schematische Darstellung eines Verlaufs eines Ladestroms in Abhängigkeit von der Gruppentemperatur nach Figur 3.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

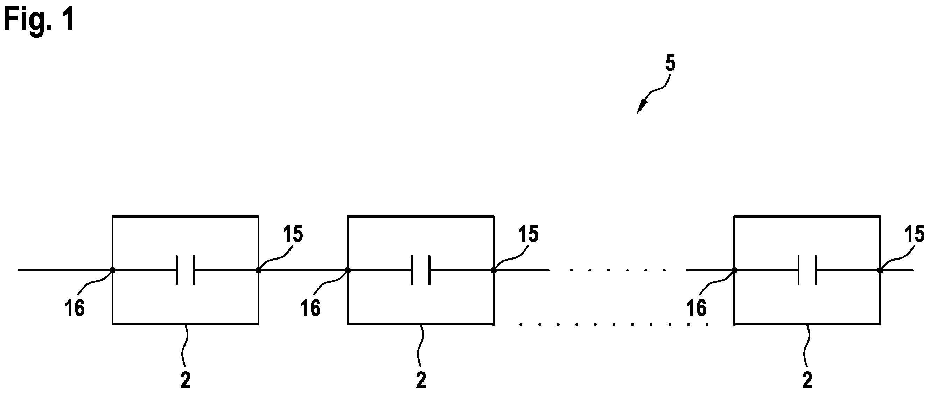

Figur 1 zeigt eine schematische Darstellung eines Batteriemoduls 5 mit mehreren Batteriezellen 2. Die Batteriezellen 2 sind innerhalb des Batteriemoduls 5 vorliegend elektrisch seriell verschaltet. Jede Batteriezelle 2 umfasst eine Elektrodeneinheit, welche jeweils eine Anode und eine Kathode aufweist. Die Anode der Elektrodeneinheit ist mit einem negativen Terminal 15 der Batteriezelle 2 verbunden. Die Kathode der Elektrodeneinheit ist mit einem positiven Terminal 16 der Batteriezelle 2 verbunden. Zur seriellen Verschaltung des Batteriemoduls 5 ist jeweils das negative Terminal 15 einer Batteriezelle 2 mit dem positiven Terminal 16 der benachbarten Batteriezelle 2 elektrisch verbunden.

Die Batteriezellen 2 des Batteriemoduls 5 weisen jeweils Festkörperelektrolyte auf und sind als Mitteltemperaturbatterien, beziehungsweise Mid-T-Batterien, ausgebildet. Die besagten Batteriezellen 2 sind nur innerhalb eines bestimmten Temperaturbereichs, beispielsweise oberhalb von 50°C, insbesondere oberhalb von 70°C, und unterhalb von 90°C, optimal betreibbar.

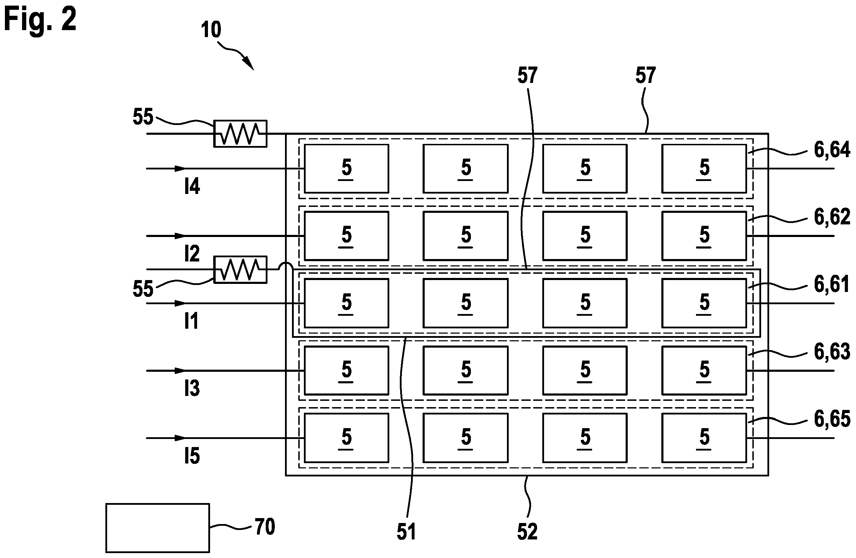

Figur 2 zeigt eine schematische Darstellung eines Batteriesystems 10 für ein Elektrofahrzeug mit mehreren Batteriesträngen 6. Die Batteriestränge 6 sind vorliegend elektrisch parallel verschaltet. Jeder der Batteriestränge 6 des Batteriesystems 10 umfasst mehrere der in Figur 1 dargestellten Batteriemodule 5, die elektrisch seriell miteinander verschaltet sind.

Die Batteriemodule 5 des Batteriesystems 10 sind vorliegend zu fünf Gruppen 61, 62, 63, 64, 65 zusammengefasst. Das Batteriesystem 10 umfasst also eine erste Gruppe 61, eine zweite Gruppe 62, eine dritte Gruppe 63, eine vierte Gruppe 64 und eine fünfte Gruppe 65 von Batteriemodulen 5. Vorliegend bilden jeweils die Batteriemodule 5 einer Gruppe 61, 62, 63, 64, 65 einen der besagten Batteriestränge 6.

Die erste Gruppe 61 von Batteriemodulen 5 ist räumlich auf einer Seite von der zweiten Gruppe 62 und auf einer gegenüberliegenden Seite von der dritten Gruppe 63 umgeben. Auf einer der ersten Gruppe 61 abgewandten Seite der zweiten Gruppe 62 ist die vierte Gruppe 64 angeordnet. Auf einer der ersten Gruppe 61 abgewandten Seite der dritten Gruppe 63 ist die fünfte Gruppe 65 angeordnet.

Das Batteriesystem 10 umfasst auch eine erste Heizvorrichtung 51 zum direkten Erwärmen der ersten Gruppe 61 von Batteriemodulen 5. Die erste Heizvorrichtung 51 umfasst vorliegend ein Heizelement 55 in Form eines elektrisch betreibbaren Heizwiderstands und einen Flüssigkeitskreislauf 57, welcher Wärme von dem Heizelement 55 zu den Batteriemodulen 5 der ersten Gruppe 61 transportiert.

Das Batteriesystem 10 umfasst ferner eine weitere Heizvorrichtung 52 zum direkten Erwärmen aller Gruppen 61, 62, 63, 64, 65 von Batteriemodulen 5. Die weitere Heizvorrichtung 52 umfasst vorliegend ebenfalls ein Heizelement 55 in Form eines elektrisch betreibbaren Heizwiderstands und einen Flüssigkeitskreislauf 57, welcher Wärme von dem Heizelement 55 zu den Batteriemodulen 5 aller Gruppen 61, 62, 63, 64, 65 transportiert.

Ferner umfasst das Batteriesystem 10 eine hier nicht dargestellte Kühlvorrichtung zur Kühlung aller Gruppen 61, 62, 63, 64, 65 von Batteriemodulen 5 des Batteriesystems 10. Die Kühlvorrichtung umfasst beispielsweise einen hier nicht dargestellten Kühlmittelkreislauf.

Die Batteriemodule 5 sind räumlich derart angeordnet, dass Abwärme, die beim Erwärmen der ersten Gruppe 61 von Batteriemodulen 5 entsteht, an die zweite Gruppe 62 und an die dritte Gruppe 63 von Batteriemodulen 5 übertragen wird. Ebenso wird Abwärme, die beim Erwärmen der zweiten Gruppe 62 von Batteriemodulen 5 entsteht, an die vierte Gruppe 64 von Batteriemodulen 5 übertragen. Abwärme, die beim Erwärmen der dritten Gruppe 63 von Batteriemodulen 5 entsteht, wird an die fünfte Gruppe 65 von Batteriemodulen 5 übertragen. Die erste Gruppe 61 ist also zentral gelegen und ist von den weiteren Gruppen 62, 63, 64, 65 umgeben.

Beim Laden der ersten Gruppe 61 von Batteriemodulen 5 fließt ein erster Ladestrom I1 durch die erste Gruppe 61. Beim Laden der zweiten Gruppe 62 von Batteriemodulen 5 fließt ein zweiter Ladestrom I2 durch die zweite Gruppe 62. Beim Laden der dritten Gruppe 63 von Batteriemodulen 5 fließt ein dritter Ladestrom I3 durch die dritte Gruppe 63. Beim Laden der vierten Gruppe 64 von Batteriemodulen 5 fließt ein vierter Ladestrom I4 durch die vierte Gruppe 64. Beim Laden der fünften Gruppe 65 von Batteriemodulen 5 fließt ein fünfter Ladestrom I5 durch die fünfte Gruppe 65.

Die besagten Ladeströme I1, I2, I3, I4, I5 sowie Heizströme zum Heizen der Heizelemente 55 werden von einer hier nicht dargestellten Ladestation geliefert. Das Batteriesystem 10 umfasst auch ein Batteriesteuergerät 70 zum Steuern der Ladeströme I1, I2, I3, I4, I5 und der Heizströme. Ferner umfasst das Batteriesystem 10 hier nicht dargestellte Sensoren zum separaten Erfassen von je einer Gruppentemperatur T in jeder der Gruppen 61, 62, 63, 64, 65 von Batteriemodulen 5. Besagte Sensoren sind mit dem Batteriesteuergerät 70 verbunden.

Es wird zwischen zwei Modi zum Laden des Batteriesystems 10 unterschieden, nämlich Standardladen und Schnellladen. Das Standardladen wird gewählt, wenn ausreichend Zeit zum Laden der Batteriemodule 5 verfügbar ist, beispielsweise mehrere Stunden. Das Schnellladen wird gewählt, wenn nur eine verhältnismäßig geringe Zeit zum Laden der Batteriemodule 5 verfügbar ist, beispielsweise weniger als eine Stunde.

Beim Standardladen des Batteriesystems 10 werden die Gruppentemperaturen T der Gruppen 61, 62, 63, 64, 65 von Batteriemodulen 5 erfasst. Wenn die besagten Gruppentemperaturen T kleiner als eine Minimaltemperatur Tmin sind, so werden alle Gruppen 61, 62, 63, 64, 65 von Batteriemodulen 5 zunächst durch die weitere Heizvorrichtung 52 erwärmt. Wenn die besagten Gruppentemperaturen T die Minimaltemperatur Tmin erreicht haben, so werden die Gruppen 61, 62, 63, 64, 65 von Batteriemodulen 5 mit Ladeströmen I1, I2, I3, I4, I5 geladen. Die Ladeströme I1, I2, I3, I4, I5 sind dabei verhältnismäßig klein und entsprechen einer C-Rate von weniger als IC. Bei einem Anstieg der Gruppentemperatur T werden die Ladeströme I1, I2, I3, I4, I5 erhöht bis beispielsweise auf eine C-Rate von IC.

Auch beim Schnellladen des Batteriesystems 10 werden die Gruppentemperaturen T der Gruppen 61, 62, 63, 64, 65 von Batteriemodulen 5 erfasst. Wenn die besagten Gruppentemperaturen T größer als die Minimaltemperatur Tmin sind, so werden die Gruppen 61, 62, 63, 64, 65 von Batteriemodulen 5 mit Ladeströmen I1, I2, I3, I4, I5 geladen. Die Ladeströme I1, I2, I3, I4, I5 sind dabei verhältnismäßig groß und entsprechen einer C-Rate von beispielsweise 3C. Gegebenenfalls werden die Batteriemodule 5 dabei von der Kühlvorrichtung gekühlt.

Wenn die Gruppentemperatur T der ersten Gruppe 61 von Batteriemodulen 5 kleiner als die Minimaltemperatur Tmin ist, so wird zunächst die erste Gruppe 61 durch die erste Heizvorrichtung 51 erwärmt. Wenn die Gruppentemperatur T der ersten Gruppe 61 die Minimaltemperatur Tmin erreicht hat erfolgt ein Laden der ersten Gruppe 61 mit dem ersten Ladestrom I1. Der erste Ladestrom I1 weist dabei zunächst einen minimalen Stromwert Imin auf, welcher beispielsweise bis zu einer C-Rate von 3C mit steigender Gruppentemperatur T ansteigt.

Mit Beginn des Ladens der ersten Gruppe 61 von Batteriemodulen 5 wird das Erwärmen der ersten Gruppe 61 durch die erste Heizvorrichtung 51 beendet. Wenn die Gruppentemperatur T der ersten Gruppe 61 von Batteriemodulen 5 eine vorgegebene Maximaltemperatur Tmax erreicht hat so wird der erste Ladestrom I1 abgeschaltet.

Abwärme, die beim Erwärmen sowie beim Laden der ersten Gruppe 61 von Batteriemodulen 5 entsteht, wird an die zweite Gruppe 62 und an die dritte Gruppe 63 von Batteriemodulen 5 übertragen, welche der ersten Gruppe 61 räumlich unmittelbar benachbart angeordnet sind. Dabei werden auch die Gruppentemperaturen T der zweiten Gruppe 62 und der dritten Gruppe 63 gemessen.

Wenn die Gruppentemperatur T der zweiten Gruppe 62 die Minimaltemperatur Tmin erreicht hat erfolgt ein Laden der zweiten Gruppe 62 mit dem zweiten Ladestrom I2. Der zweite Ladestrom I2 weist dabei zunächst einen minimalen Stromwert Imin auf, welcher beispielsweise bis zu einer C-Rate von 3C mit steigender Gruppentemperatur T ansteigt. Wenn die Gruppentemperatur T der zweiten Gruppe 62 die Maximaltemperatur Tmax erreicht hat so wird der zweite Ladestrom I2 abgeschaltet. Entsprechendes gilt für die dritte Gruppe 63.

Abwärme, die beim Laden der zweiten Gruppe 62 und der dritten Gruppe 63 entsteht, wird an die vierte Gruppe 64 und an die fünfte Gruppe 65 von Batteriemodulen 5 übertragen, welche der zweiten Gruppe 62, beziehungsweise der dritten Gruppe 63 räumlich unmittelbar benachbart angeordnet sind. Dabei werden auch die Gruppentemperaturen T der vierten Gruppe 64 und der fünften Gruppe 65 gemessen.

Wenn die Gruppentemperatur T der vierten Gruppe 64 die Minimaltemperatur Tmin erreicht hat erfolgt ein Laden der vierten Gruppe 64 mit dem vierten Ladestrom I4. Der vierte Ladestrom I4 weist dabei zunächst einen minimalen Stromwert Imin auf, welcher beispielsweise bis zu einer C-Rate von 3C mit steigender Gruppentemperatur T ansteigt. Wenn die Gruppentemperatur T der vierten Gruppe 64 die Maximaltemperatur Tmax erreicht hat so wird der vierte Ladestrom I4 abgeschaltet. Entsprechendes gilt für die fünfte Gruppe 65.

Der Ladestrom I1, I2, I3, I4, I5 einer Gruppe 61, 62, 63, 64, 65 von Batteriemodulen 5 wird in Abhängigkeit von der Gruppentemperatur T der jeweiligen Gruppe 61, 62, 63, 64, 65 variiert. Der jeweilige Ladestrom I1, I2, I3, I4, I5 weist dabei den minimalen Stromwert Imin auf, wenn die Gruppentemperatur T der jeweiligen Gruppe 61, 62, 63, 64, 65 gleich der Minimaltemperatur Tmin ist. Bei einem Anstieg der Gruppentemperatur T wird der Ladestrom I1, I2, I3, I4, I5 erhöht.

Beginnend bei dem minimalen Stromwert Imin wird der Ladestrom I1, I2, I3, I4, I5 zunächst ständig erhöht, bis die Gruppentemperatur T der Gruppe 61, 62, 63, 64, 65 gleich einer Schwellentemperatur Tsch ist. Die Schwellentemperatur Tsch ist dabei größer als die Minimaltemperatur Tmin und kleiner als die Maximaltemperatur Tmax.

Ein Verlauf des Ladestroms I1, I2, I3, I4, I5 in Abhängigkeit von der Gruppentemperatur T weist bei der Schwellentemperatur Tsch einen Wendepunkt auf. Der Ladestrom I1, I2, I3, I4, I5 weist, wenn die Gruppentemperatur T gleich der Schwellentemperatur Tsch ist, einen Schwellenwert Isch auf.

Der Ladestrom I1, I2, I3, I4, I5 ist größer als der besagte Schwellenwert Isch, wenn die Gruppentemperatur T größer als die Schwellentemperatur Tsch und kleiner als die Maximaltemperatur Tmax ist. Der Ladestrom I1, I2, I3, I4, I5 wird dabei derart variiert, dass die Gruppentemperatur T zwischen der Minimaltemperatur Tmin und der Maximaltemperatur Tmax bleibt, wobei die Batteriezellen 2 in der besagten Gruppe 61, 62, 63, 64, 65 von Batteriemodulen 5 möglichst schnell geladen werden.

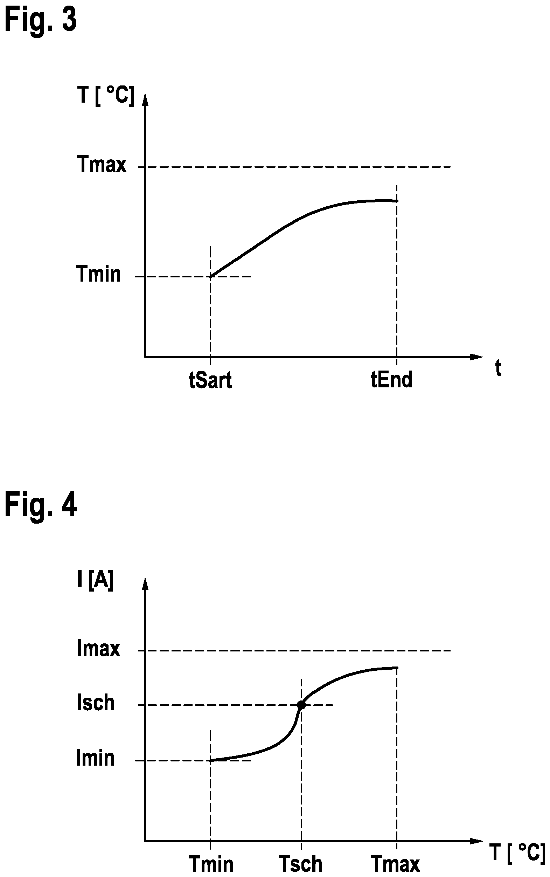

Figur 3 zeigt eine schematische Darstellung eines Verlaufs einer Gruppentemperatur T einer Gruppe 61, 62, 63, 64, 65 von Batteriemodulen 5 während des Ladens. Zu einem Startzeitpunkt tStart hat die Gruppentemperatur T der Gruppe 61, 62, 63, 64, 65 die Minimaltemperatur Tmin erreicht. Während des Ladens mit dem Ladestrom I1, I2, I3, I4, I5 erhöht sich die Gruppentemperatur T der Gruppe 61, 62, 63, 64, 65. Wenn zu einem Endzeitpunkt tEnd die Gruppentemperatur T der Gruppe 61, 62, 63, 64, 65 die Maximaltemperatur Tmax erreicht hat, so wird der Ladestrom I1, I2, I3, I4, I5 abgeschaltet.

Figur 4 zeigt eine schematische Darstellung eines Verlaufs eines Ladestroms I1, I2, I3, I4, I5 in Abhängigkeit von der Gruppentemperatur T der jeweiligen Gruppe 61, 62, 63, 64, 65 nach Figur 3. Wenn die Gruppentemperatur T gleich der Minimaltemperatur Tmin ist, so weist der Ladestrom I1, I2, I3, I4, I5 den minimalen Stromwert Imin auf. Wenn die Gruppentemperatur T größer als die Minimaltemperatur Tmin und kleiner als die Schwellentemperatur Tsch ist, so weist der Ladestrom I1, I2, I3, I4, I5 einen Wert auf, welcher zwischen dem minimalen Stromwert Imin und dem Schwellenwert Isch liegt. Wenn die Gruppentemperatur T gleich der Schwellentemperatur Tsch ist, so weist der Ladestrom I1, I2, I3, I4, I5 den Schwellenwert Isch auf. Wenn die Gruppentemperatur T größer als die Schwellentemperatur Tsch ist, so weist der Ladestrom I1, I2, I3, I4, I5 einen Wert auf, welcher zwischen dem Schwellenwert Isch und dem maximalen Stromwert Imax liegt.

Der Verlauf des Ladestroms I1, I2, I3, I4, I5 weist in dem Bereich zwischen der Minimaltemperatur Tmin und der Schwellentemperatur Tsch eine Linkskrümmung auf. In dem Bereich zwischen der Schwellentemperatur Tsch und der Maximaltemperatur Tmax weist der Verlaufs des Ladestroms I1, I2, I3, I4, I5 eine Rechtskrümmung auf. Der Verlauf des Ladestroms I1, I2, I3, I4, I5 weist somit in Abhängigkeit von der Gruppentemperatur T bei der Schwellentemperatur Tsch einen Wendepunkt auf.

Die Batteriezellen 2 weisen einen temperaturabhängigen elektrischen Innenwiderstand auf. Bei der Schwellentemperatur Tsch ist der Innenwiderstand der Batteriezellen 2 minimal. Wenn also der Ladestrom I1, I2, I3, I4, I5 kleiner als der Schwellenwert Isch ist, so wird eine minimale Menge von Abwärme beim Laden der Batteriemodulen 5 produziert, welche zum Erwärmen der Batteriemodule 5 der weiteren Gruppen 62, 63, 64, 65 zur Verfügung steht. Wenn der Ladestrom I1, I2, I3, I4, I5 größer als der Schwellenwert Isch ist, so wird eine größere Menge von Abwärme produziert, welche dann zum stärkeren Erwärmen der Batteriemodulen 5 der weiteren Gruppen 62, 63, 64, 65 zur Verfügung steht.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriesystem (10) für ein Elektrofahrzeug, umfassend
eine Mehrzahl von Batteriemodulen (5) und
eine erste Heizvorrichtung (51) zum direkten Erwärmen einer ersten Gruppe (61) von Batteriemodulen (5), wobei
jedes Batteriemodul (5) mindestens eine Batteriezelle (2) aufweist, und wobei die erste Gruppe (61) von Batteriemodulen (5) räumlich auf mindestens zwei Seiten von je einer weiteren Gruppe (62, 63, 64, 65) von Batteriemodulen (5) umgeben ist, und wobei
die Batteriemodule (5) räumlich derart angeordnet sind, dass Abwärme, die beim Erwärmen und/oder beim Laden der ersten Gruppe (61) von Batteriemodulen (5) entsteht, an weitere Gruppen (62, 63, 64, 65) von Batteriemodulen (5) übertragen wird.

2. Batteriesystem (10) nach Anspruch 1, wobei
die Batteriemodule (5) der ersten Gruppe (61) von Batteriemodulen (5) seriell verschaltet sind und einen Batteriestrang (6) bilden.

3. Verfahren zum Laden eines Batteriesystems (10) nach einem der vorstehenden Ansprüche, umfassend folgende Schritte:
- Erwärmen der ersten Gruppe (61) von Batteriemodulen (5) durch die erste Heizvorrichtung (51);
- Laden der ersten Gruppe (61) von Batteriemodulen (5) mit einem ersten Ladestrom (I1), wenn eine Gruppentemperatur (T) der ersten Gruppe (61) von Batteriemodulen (5) eine vorgegebene Minimaltemperatur (Tmin) erreicht hat;
- Übertragen von Abwärme, die beim Erwärmen und/oder beim Laden der ersten Gruppe (61) von Batteriemodulen (5) entsteht, an weitere Gruppen (62, 63, 64, 65) von Batteriemodulen (5);
- Laden mindestens einer weiteren Gruppe (62, 63, 64, 65) von Batteriemodulen (5) mit einem weiteren Ladestrom (I2, I3, I4, I5), wenn eine Gruppentemperatur (T) der weiteren Gruppe (62, 63, 64, 65) von Batteriemodulen (5) die vorgegebene Minimaltemperatur (Tmin) erreicht hat.

4. Verfahren nach Anspruch 3, wobei
der Ladestroms (I1, I2, I3, I4, I5) einer Gruppe (61, 62, 63, 64, 65) von Batteriemodulen (5) abgeschaltet wird, wenn die Gruppentemperatur (T) der Gruppe (61, 62, 63, 64, 65) von Batteriemodulen (5) eine vorgegebene Maximaltemperatur (Tmax) erreicht hat.

5. Verfahren nach einem der Ansprüche 3 bis 4, wobei
mindestens eine weitere Gruppe (62, 63, 64, 65) von Batteriemodulen (5) zusätzlich durch eine weitere Heizvorrichtung (52) erwärmt wird, bevor die weitere Gruppe (62, 63, 64, 65) von Batteriemodulen (5) mit dem weiteren Ladestrom (I2, I3, I4, I5) geladen wird.

6. Verfahren nach einem der Ansprüche 3 bis 5, wobei
eine Gruppe (61, 62, 63, 64, 65) von Batteriemodulen (5) durch eine Kühlvorrichtung gekühlt wird, wenn die Gruppe (61, 62, 63, 64, 65) von Batteriemodulen (5) die vorgegebene Maximaltemperatur (Tmax) erreicht hat.

7. Verfahren nach einem der Ansprüche 3 bis 6, wobei
der Ladestrom (I1, I2, I3, I4, I5) einer Gruppe (61, 62, 63, 64, 65) von Batteriemodulen (5) in Abhängigkeit von der Gruppentemperatur (T) der Gruppe (61, 62, 63, 64, 65) von Batteriemodulen (5) variiert wird.

8. Verfahren nach Anspruch 7, wobei
der Ladestrom (I1, I2, I3, I4, I5) einer Gruppe (61, 62, 63, 64, 65) von Batteriemodulen (5) einen minimalen Stromwert (Imin) aufweist, wenn die Gruppentemperatur (T) der Gruppe (61, 62, 63, 64, 65) von Batteriemodulen (5) gleich der Minimaltemperatur (Tmin) ist.

9. Verfahren nach einem der Ansprüche 7 bis 8, wobei
der Ladestrom (I1, I2, I3, I4, I5) einer Gruppe (61, 62, 63, 64, 65) von Batteriemodulen (5) beginnend bei dem minimalen Stromwert (Imin) ständig erhöht wird,
bis die Gruppentemperatur (T) der Gruppe (61, 62, 63, 64, 65) von Batteriemodulen (5) gleich einer Schwellentemperatur (Tsch) ist.

10. Verfahren nach einem der Ansprüche 7 bis 9, wobei
ein Verlauf des Ladestroms (I1, I2, I3, I4, I5) einer Gruppe (61, 62, 63, 64, 65) von Batteriemodulen (5) in Abhängigkeit von der Gruppentemperatur (T) der Gruppe (61, 62, 63, 64, 65) von Batteriemodulen (5) einen Wendepunkt bei einer Schwellentemperatur (Tsch) aufweist.

11. Verfahren nach einem der Ansprüche 9 bis 10, wobei
der Ladestrom (I1, I2, I3, I4, I5) einer Gruppe (61, 62, 63, 64, 65) von Batteriemodulen (5) bei der Schwellentemperatur (Tsch) einen Schwellenwert (Isch) aufweist, und wobei
der Ladestrom (I1, I2, I3, I4, I5) der Gruppe (61, 62, 63, 64, 65) von Batteriemodulen (5) größer als der Schwellenwert (Isch) ist, wenn die Gruppentemperatur (T) der Gruppe (61, 62, 63, 64, 65) von Batteriemodulen (5) größer als die Schwellentemperatur (Tsch) und kleiner als die Maximaltemperatur (Tmax) ist.

12. Elektrofahrzeug, umfassend mindestens ein Batteriesystem (10) nach einem der Ansprüche 1 bis 2, welches mit einem Verfahren nach einem der Ansprüche 3 bis 11 betreibbar ist.

## Claims

1. Battery system (10) for an electric vehicle, comprising
a plurality of battery modules (5) and
a first heating device (51) for directly heating a first group (61) of battery modules (5), wherein
each battery module (5) has at least one battery cell (2), and
wherein the first group (61) of battery modules (5) is spatially surrounded on at least two sides by in each case a further group (62, 63, 64, 65) of battery modules (5), and wherein
the battery modules (5) are spatially arranged in such a way that waste heat that arises during heating and/or during charging of the first group (61) of battery modules (5) is transferred to further groups (62, 63, 64, 65) of battery modules (5).

2. Battery system (10) according to Claim 1, wherein the battery modules (5) in the first group (61) of battery modules (5) are connected in series and form a battery string (6).

3. Method for charging a battery system (10) according to either of the preceding claims, comprising the following steps:
- heating the first group (61) of battery modules (5) by means of the first heating device (51);
- charging the first group (61) of battery modules (5) with a first charging current (II) when a group temperature (T) of the first group (61) of battery modules (5) has reached a predefined minimum temperature (Tmin);
- transferring waste heat that arises during heating and/or during charging of the first group (61) of battery modules (5) to further groups (62, 63, 64, 65) of battery modules (5);
- charging at least one further group (62, 63, 64, 65) of battery modules (5) with a further charging current (12, 13, 14, 15) when a group temperature (T) of the further group (62, 63, 64, 65) of battery modules (5) has reached the predefined minimum temperature (Tmin).

4. Method according to Claim 3, wherein
the charging current (II, 12, 13, 14, 15) of a group (61, 62, 63, 64, 65) of battery modules (5) is switched off when the group temperature (T) of the group (61, 62, 63, 64, 65) of battery modules (5) has reached a predefined maximum temperature (Tmax).

5. Method according to either of Claims 3 and 4, wherein
at least one further group (62, 63, 64, 65) of battery modules (5) is additionally heated by a further heating device (52) before the further group (62, 63, 64, 65) of battery modules (5) is charged with the further charging current (12, 13, 14, 15).

6. Method according to one of Claims 3 to 5, wherein a group (61, 62, 63, 64, 65) of battery modules (5) is cooled by a cooling device when the group (61, 62, 63, 64, 65) of battery modules (5) has reached the predefined maximum temperature (Tmax).

7. Method according to one of Claims 3 to 6, wherein the charging current (II, 12, 13, 14, 15) of a group (61, 62, 63, 64, 65) of battery modules (5) is varied depending on the group temperature (T) of the group (61, 62, 63, 64, 65) of battery modules (5).

8. Method according to Claim 7, wherein
the charging current (I1, I2, I3, I4, I5) of a group (61, 62, 63, 64, 65) of battery modules (5) has a minimum current value (Imin) when the group temperature (T) of the group (61, 62, 63, 64, 65) of battery modules (5) is equal to the minimum temperature (Tmin).

9. Method according to either of Claims 7 and 8, wherein,
starting at the minimum current value (Imin), the charging current (I1, 12, 13, 14, 15) of a group (61, 62, 63, 64, 65) of battery modules (5) is increased continuously
until the group temperature (T) of the group (61, 62, 63, 64, 65) of battery modules (5) is equal to a threshold temperature (Tsch).

10. Method according to one of Claims 7 to 9, wherein a profile of the charging current (I1, 12, 13, 14, 15) of a group (61, 62, 63, 64, 65) of battery modules (5) has a point of inflection at a threshold temperature (Tsch) depending on the group temperature (T) of the group (61, 62, 63, 64, 65) of battery modules (5).

11. Method according to either of Claims 9 and 10, wherein
the charging current (I1, 12, 13, 14, 15) of a group (61, 62, 63, 64, 65) of battery modules (5) has a threshold value (Isch) at the threshold temperature (Tsch), and wherein
the charging current (I1, 12, 13, 14, 15) of the group (61, 62, 63, 64, 65) of battery modules (5) is greater than the threshold value (Isch) when the group temperature (T) of the group (61, 62, 63, 64, 65) of battery modules (5) is greater than the threshold temperature (Tsch) and less than the maximum temperature (Tmax).

12. Electric vehicle comprising at least one battery system (10) according to either of Claims 1 and 2, which can be operated using a method according to one of Claims 3 to 11.

## Revendications

1. Système de batterie (10) pour un véhicule électrique, comprenant
une pluralité de modules de batterie (5), et
un premier dispositif de chauffage (51) pour le chauffage direct d'un premier groupe (61) de modules de batterie (5), dans lequel
chaque module de batterie (5) présente au moins un élément de batterie (2), et
le premier groupe (61) de modules de batterie (5) étant entouré spatialement sur au moins deux côtés par respectivement un autre groupe (62, 63, 64, 65) de modules de batterie (5), et dans lequel
les modules de batterie (5) sont disposés spatialement de telle sorte que la chaleur dissipée qui est produite lors du chauffage et/ou du chargement du premier groupe (61) de modules de batterie (5) est transférée à d'autres groupes (62, 63, 64, 65) de modules de batterie (5).

2. Système de batterie (10) selon la revendication 1, dans lequel les modules de batterie (5) du premier groupe (61) de modules de batterie (5) sont connectés en série et constituent un ensemble de batteries (6).

3. Procédé de chargement d'un système de batterie (10) selon l'une quelconque des revendications précédentes, comprenant les étapes suivantes consistant à :
- chauffer le premier groupe (61) de modules de batterie (5) par le premier dispositif de chauffage (51) ;
- charger le premier groupe (61) de modules de batterie (5) avec un premier courant de charge (I1) lorsqu'une température de groupe (T) du premier groupe (61) de modules de batterie (5) a atteint une température minimale (Tmin) prédéfinie ;
- transférer la chaleur dissipée qui est produite lors du chauffage et/ou du chargement du premier groupe (61) de modules de batterie (5) à d'autres groupes (62, 63, 64, 65) de modules de batterie (5) ;
- charger au moins un autre groupe (62, 63, 64, 65) de modules de batterie (5) avec un autre courant de charge (I2, I3, I4, I5) lorsqu'une température de groupe (T) de l'autre groupe (62, 63, 64, 65) de modules de batterie (5) a atteint la température minimale (Tmin) prédéfinie.

4. Procédé selon la revendication 3, dans lequel le courant de charge (I1, I2, I3, I4, I5) d'un groupe (61, 62, 63, 64, 65) de modules de batterie (5) est coupé lorsque la température de groupe (T) du groupe (61, 62, 63, 64, 65) de modules de batterie (5) a atteint une température maximale (Tmax) prédéfinie.

5. Procédé selon l'une quelconque des revendications 3 et 4, dans lequel au moins un autre groupe (62, 63, 64, 65) de modules de batterie (5) est chauffé en plus par un autre dispositif de chauffage (52) avant que l'autre groupe (62, 63, 64, 65) de modules de batterie (5) ne soit chargé avec l'autre courant de charge (I2, I3, I4, I5).

6. Procédé selon l'une quelconque des revendications 3 à 5, dans lequel un groupe (61, 62, 63, 64, 65) de modules de batterie (5) est refroidi par un dispositif de refroidissement lorsque le groupe (61, 62, 63, 64, 65) de modules de batterie (5) a atteint la température maximale (Tmax) prédéfinie.

7. Procédé selon l'une quelconque des revendications 3 à 6, dans lequel le courant de charge (I1, I2, I3, I4, I5) d'un groupe (61, 62, 63, 64, 65) de modules de batterie (5) varie en fonction de la température de groupe (T) du groupe (61, 62, 63, 64, 65) de modules de batterie (5).

8. Procédé selon la revendication 7, dans lequel le courant de charge (I1, I2, I3, I4, I5) d'un groupe (61, 62, 63, 64, 65) de modules de batterie (5) présente une valeur de courant minimale (Imin) lorsque la température de groupe (T) du groupe (61, 62, 63, 64, 65) de modules de batterie (5) est égale à la température minimale (Tmin).

9. Procédé selon l'une quelconque des revendications 7 et 8, dans lequel le courant de charge (I1, I2, I3, I4, I5) d'un groupe (61, 62, 63, 64, 65) de modules de batterie (5) est augmenté en continu en commençant par la valeur de courant minimale (Imin) jusqu'à ce que la température de groupe (T) du groupe (61, 62, 63, 64, 65) de modules de batterie (5) soit égale à une température seuil (Tsch).

10. Procédé selon l'une quelconque des revendications 7 à 9, dans lequel un tracé du courant de charge (I1, I2, I3, I4, I5) d'un groupe (61, 62, 63, 64, 65) de modules de batterie (5) présente un point d'inflexion au niveau d'une température seuil (Tsch) en fonction de la température de groupe (T) du groupe (61, 62, 63, 64, 65) de modules de batterie (5).

11. Procédé selon l'une quelconque des revendications 9 et 10, dans lequel
le courant de charge (I1, I2, I3, I4, I5) d'un groupe (61, 62, 63, 64, 65) de modules de batterie (5) présente au niveau d'une température seuil (Tsch) une valeur seuil (Isch), et dans lequel
le courant de charge (I1, I2, I3, I4, I5) du groupe (61, 62, 63, 64, 65) de modules de batterie (5) est supérieur à la valeur seuil (Isch) lorsque la température de groupe (T) du groupe (61, 62, 63, 64, 65) de modules de batterie (5) est supérieure à la température seuil (Tsch) et inférieure à la température maximale (Tmax).

12. Véhicule électrique, comprenant au moins un système de batterie (10) selon l'une quelconque des revendications 1 et 2 qui peut fonctionner avec un procédé selon l'une quelconque des revendications 3 à 11.
